Europäisches Patentamt

European Patent Office

Office européen des brevets

(11) Publication number: **0 342 438**
**A2**

# EUROPEAN PATENT APPLICATION

(21) Application number: 89108063.2

(51) Int. Cl.⁴: **F16J 15/32**

(22) Date of filing: 04.05.89

(30) Priority: 19.05.88 YU 976/88

(43) Date of publication of application:
**23.11.89 Bulletin 89/47**

(84) Designated Contracting States:
**AT BE CH DE ES FR GB GR IT LI LU NL SE**

(71) Applicant: Zaloker, Aleksandra
Bobenckova 10
61000 Ljubljana(YU)

(72) Inventor: Zaloker, Aleksandra
Bobenckova 10
61000 Ljubljana(YU)

(74) Representative: Rottmann, Maximilian R.
c/o Rottmann, Zimmermann + Partner AG
Glattalstrasse 37
CH-8052 Zürich(CH)

(54) Sealing guide for a piston rod and use of the same.

(57) A sealing guide for a piston rod is comprising:
a) a guide nozzle surrounding the piston rod with such a tolerance that the piston rod is precisely guided but is still allowed to move; and
b) at least one sealing element also surrounding the piston rod,
said guide nozzle and said sealing element being arranged on opposite ends of an element surrounding itself said piston rod and having an interior opening of a diameter which is larger than the diameter of said piston rod.

The sealing guide is use in pneumatic spring actions.

FIG. 1

## Sealing guide for a piston rod and use of the same

This invention relates to a sealing guide intended for safely guiding a piston rod and guaranteeing its proper sealing.

All solutions proposed so far for the abovementioned problem had the drawback that the piston rod was rigidly fixed to the axis of the workpiece and did not allow slipping from the same. Particularly, the piston rod had to be absolutely coaxial with the guiding means.

It is the object of the invention to provide for sealing guide means which allow the piston rod to move on said workpiece, and particularly on or along an axis which to some extent may be inclined against the axis of the guiding means, without influence on the proper working of the combination.

This object is achieved by a sealing guide as defined in claim 1.

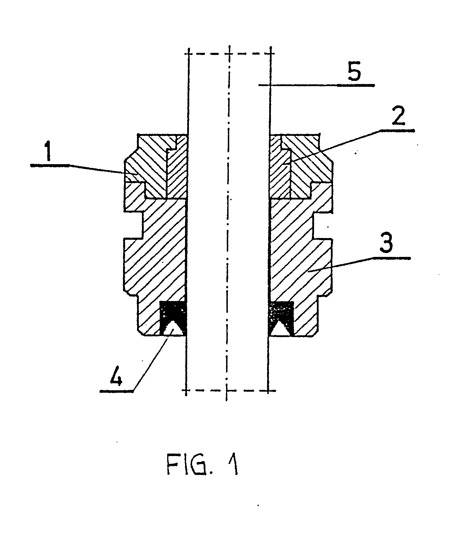

An exemple of an embodiment of the sealing guide according to the invention is desrcibed hereafter with reference to the drawing.

A guide nozzle 2 surrounding a piston rod 5 with such a tolerance that the same is precisely guided but is still allowed to move is secured to an element 3 by means of a second element 1 which is also surrounding a guide nozzle 2. Special attention should be paid to the the possibility of material shrinking and expansion, respectively, of guiding nozzle 2 and piston rod 5.

The diameter of the internal opening of element 3 is preferably 5 to 10 % larger than the outer diameter of piston rod 5.

On the opposite side of element 3, a sealing element 4 is inserted into a groove of element 3. Care should be taken that said sealing element is made of a highly resistant material which will permanently guarantee the proper working of the sealing guide and of the sealing.

If the sealing element 4 is made of an elastic material, the arrangement allows the piston rod to move on or along an axis which to some extent may be inclined against the axis of the guiding means, without influence on the proper working of the combination.

In an other embodiment of the invention, not shown in the drawing, the piston rod 5 is sealed against element 3 along part of or the whole length of the latter with packing rings or O-rings. This embodiment does of course not allow any deviations from the central axis.

The sealing guides according to this inventions are advantageously used in pneumatic spring actions which permanently are under high pressure.

## Claims

1. Sealing guide for a piston rod (5), comprising:
a) a guide nozzle (2) surrounding the piston rod (5) with such a tolerance that the piston rod (5) is precisely guided but is still allowed to move; and
b) at least one sealing element (4) also surrounding the piston rod (5),
said guide nozzle (2) and said sealing element (4) being arranged on opposite ends of an element (3) surrounding itself said piston rod (5) and having an interior opening of a diameter which is larger than the diameter of said piston rod (5).

2. Sealing guide according to claim 1, characterized in that the guide nozzle (2) is secured to said element (3) by means of a second element (1) also surrounding the guide nozzle (2).

3. Sealing guide according to claim 1 or 2, characterized in that the interior opening of said element (3) has a diameter which is by 5 to 10 % larger than the outer diameter of said piston rod (5).

4. Sealing guide according to one or more of the preceeding claims, characterized in that the sealing element (4) is made of an elastic material.

5. Use of a sealing guide according to one or more of the preceeding claims in pneumatic spring actions.

FIG. 1